# EUROPÄISCHE PATENTANMELDUNG

(11) **EP 2 031 300 A1**
(43) Veröffentlichungstag der Anmeldung: **04.03.2009**
(21) Anmeldenummer: 08015080.8
(22) Anmeldetag: 27.08.2008
(51) Int. Cl.: F21V 23/02, F21V 19/00, F21K 7/00

(54) **Leuchte**

(30) Priorität: 31.08.2007 DE 202007012248 U
(71) Anmelder: Seliger, Roland, 78048 Villingen-Schwenningen (DE)
(72) Erfinder: Seliger, Roland, 78048 Villingen-Schwenningen (DE)
(74) Vertreter: Neymeyer, Franz

(57) **Zusammenfassung**

Die Erfindung betrifft eine Leuchte (1) mit einem Licht erzeugenden Leuchtmittel (5) und einem Kupplungselement (3), über welches dem Leuchtmittel (5) elektrische Energie zuführbar ist und mit einer Leuchtenfassung (4) mit welcher das Kupplungselement (3) koppelbar ist. Um einen möglichst für den Anwender gefahrlosen Einsatz der Leuchte sicherzustellen, ist erfindungsgemäß vorgesehen, dass zur elektrischen Kopplung zwischen der Leuchtenfassung (4) und dem Kupplungselement (3) und zur Energieversorgung des Leuchtmittels (5) eine der Leuchtenfassung (4) zugeordnete Primärspule (16) und eine dem Kupplungselement (3) zugeordnete Sekundärspule (8) vorgesehen sind.

## Beschreibung

Die Erfindung betrifft eine Leuchte mit einem Licht erzeugenden Leuchtmittel und einem Kupplungselement, über welches dem Leuchtmittel elektrische Energie zuführbar ist und mit einer Leuchtenfassung mit welcher das Kupplungselement koppelbar ist.

Leuchten im Sinne dieser Erfindung können einfache Glühbirnen, Halogenbirnen, LED, Energiesparlampen, Leuchtstoffröhren oder auch andere bekannte elektrische, Licht emittierende Leuchten sein.

Bei solche bekannte Leuchten werden zur Energieversorgung an eine entsprechende Spannungsversorgung angeschlossen, wobei die Leuchten hierzu regelmäßig mit einem entsprechenden Kupplungselement versehen sind. Diesem Kupplungselement ist eine Leuchtenfassung zugeordnet, mit welchem das Kupplungselement koppelbar ist. Die Leuchtenfassung ihrerseits ist wiederum an eine externe Spannungsversorgung, wie beispielsweise dem Hausnetz, oder einem Netzteil angeschlossen. Die Übertragung der elektrischen Energie von der Leuchtenfassung auf das Leuchtmittel der Leuchte erfolgt über elektromechanische Kontakte, die einerseits im Bereich des Kupplungselementes der Leuchte und andererseits im Bereich der Leuchenfassung vorgesehen sind. Die Kontaktierung dieser Kontakte wird durch einfaches einschrauben, oder einstecken des Kupplungselementes in die Leuchtenfassung bewirkt.

Diese Art der elektromechanischen Kontaktierung birgt einerseits, beispielsweise durch eine falsche Polung der Kontaktpaare gewisse Gefahren. Auch sind bei nicht in der Leuchtenfassung montierte Leuchte die Kontakte der Leuchtenfassung in der Tegel von außen zugänglich, so dass insbesondre beim Betrieb am Hausnetz bei 230 V bei unsachgemäßer Bedienung sogar Lebensgefahr besteht. In Feuchtraumbereichen müssen des Weiteren diverse Vorkehrungen getroffen werden, um zu verhindern, dass Feuchtigkeit insbesondere in den Verbindungsbereich der Kontakte gelangen kann. Sollen solche Leuchten auch außer Haus oder zur Unterwasserbeleuchtung eingesetzt werden, so sind ebenfalls aufwändige Vorkehrungen zu treffen, einerseits das Gefahrenpotential zu minimieren und andererseits auch um die Leuchten gegen Zerstörung durch Feuchtigkeit zu schützen.

Demgemäß liegt der Erfindung die Aufgabe zugrunde, eine Leuchte derart auszugestalten, dass die genannten nachteile vermieden sind.

Die Aufgabe wird zusammen mit den Merkmalen des Oberbegriffes des Anspruches 1 dadurch gelöst, dass zur elektrische Kopplung zwischen der Leuchtenfassung und dem Kupplungselement und zur Energieversorgung des Leuchtmittels eine der Leuchtenfassung zugeordnete Primärspule und eine dem Kupplungselement zugeordnete Sekundärspule vorgesehen sind.

Durch die erfindungsgemäße Ausgestaltung wird eine elektrische Kopplung zwischen dem Leuchtmittel er Leuchte und der Leuchtenfassung zur Verfügung gestellt, bei welcher keinerlei von außen zugänglichen, elektrischen Kontakte vorhadne sind. Damit ist eine Gefährdung einer Bedienungsperson beispielsweise durch Stromschlag sicher ausgeschlossen. Des Weiteren können bei dieser Art der elektrischen Kopplung keine Betriebsstörungen beispielsweise durch Korrosion der aus dem Stand der Technik bekannten Kontakte hervorgerufen werden.

Weitere vorteilhafte Ausgestaltungen der Erfindung sind den Unteransprüchen zu entnehmen.

So kann gemäß Anspruch 2 vorgesehen sein, dass die Primärspule und die Sekundärspule bei mit der Leuchtenfassung gekoppeltem Kupplungselement einander benachbart angeordnet sind, Durch diese Ausgestaltung wird eine äußerst effektive elektromagnetische Kopplung zwischen der Primärspule und der Sekundärspule erreicht.

Weiter kann gemäß Anspruch 3 vorgesehen sein, dass das Kupplungselement zapfenförmig ausgebildet ist und, dass die Sekundärspule als Ringspule im Kupplungselement angeordnet ist und, dass die Leuchtenfassung topfartig ausgebildet ist und, dass die Primärspule als Ringspule ausgebildet in der Leuchtenfassung angeordnet ist. Diese Ausgestaltung ermöglicht einerseits eine einfache "Montage" des Kupplungselementes in der Leuchtefassung und andereerseits eine äußerst kostengünstige Herstellung.

Gemäß Anspruch 4 kann vorgesehen sein, dass das Kupplungselement in die Leuchtenfassung einsetzbar ist und, dass die Primärspule die Sekundärspule bei eingestecktem Kupplungselement in geringem radialen Abstand umschließt. Durch diese Ausgestaltung wird eine äußerst effektive elektromagnetische Kopplung zwischen der Primärspule und er Sekundärspule erreicht.

Durch die Ausgestaltung gemäß Anspruch 5 ist ein Auswechseln einer Leuchte äußerst einfach und gefahrlos auch durch einen Laien möglich. Dazu ist erfindungsgemäß vorgesehen, dass das Kupplungselement mit der Leuchtenfassung über eine Gewindeverbindung, eine Reibschlussverbindung oder eine lösbare Rastverbindung lösbar gekoppelt ist.

Weiter kann die Leuchte gemäß Anspruch 6 auch als Glühbirne mit einem Glühdraht als Leuchtmittel ausgebildet sein, wobei die Sekundärspule in einem als Kupplungselement dienenden Schraubsockel der Glühbirne angeordnet ist. Durch diese Ausgestaltung wird eine Leuchte zur Verfügung gestellt, die in herkömmlicher Weise handhabbar ist, was zu einer hohen Akzeptanz beim Anwender führt.

Da in Falle der Ausgestaltung gemäß Anspruch 6 die Sekundärspule im Schraubsockel der Glühbirne gemäß Anspruch 7 dicht eingegossen sein kann, ist ein Einsatz beispielsweise in einer Feuchtraumumgebung, außer Haus oder zu Unterwasserbeleuchtung gefahrlos möglich.

Hierzu kann gemäß Anspruch 8 auch eine spezielle Ausgestaltung der Leuchtenfassung vorgesehen sein. So wird gemäß Anspruch 8 beansprucht, dass die Leuchtenfassung eine umlaufende Innenwand mit einem Innengewinde aufweist und, dass in radialem Abstand zur Innenwand eine Außenwand vorgesehen ist und, dass die Primärspule zwischen der Innenwand und der Außenwand im axialen Bereich des Innengewindes angeordnet und in die Leuchtenfassung dicht eingegossen ist. Da sowohl die Leuchte selbst als auch die Leuchtenfassung beide absolut wasserdicht und ohne jegliche "Verschleißteile" ausgebildet sind, ist durch diese Ausgestaltung insbesondere auch ein sicherer Einsatz unter Wasser gefahrlos möglich. Insbesondere kann die Leuchte zusammen mit der Leuchtenfassung ohne dass weitere Vorkehrungen getroffen werden müssen unter Wasser beliebig positioniert werden.

Auch ist die erfindungsgemäße Ausgestaltung für den Niedervoltbereich einsetzbar, so dass gemäß Anspruch 9 auch vorgesehen sein kann, dass als Leuchtmittel wenigstens eine LED vorgesehen ist, welche in einem mit dem Kupplungselement in Verbindung stehenden Aufnahmegehäuse angeordnet ist.

Diese LED kann bzw. können gemäß Anspruch 10 auf einer Platine derart angeordnet sein, dass die LED bei einer vorbestimmten Position der Platine im Aufnahmegehäuse aus dem Aufnahmegehäuse zumindest teilweise radial und/oder axial herausragt bzw. herausragen. Durch diese Ausgestaltung sind in vorteilhafter Weise unterschiedliche Beleuchtungseffekte erreichbar.

Durch die Ausgestaltung gemäß Anspruch 11 sind auch solche LED-Ausführung unter Wasser oder in feuchter Umgebung sicher einsetzbar. So kann gemäß Anspruch 11 vorgesehen sein, dass die im Aufnahmegehäuse angeordnete Platine und die sich bis in das Aufnahmegehäuse erstreckenden Teile der LED dicht mit einem Kunstharz oder einem ähnlichen Werkstoff vergossen sind.

Die Erfindungsgemäße Ausgestaltung der Energieversorgung des eigentlichen Leuchtmittels mittels einer Primärspule und einer Sekundärspule ist auch auf die eingangs genannte Leuchten oder Lampen übertragbar. Da bei dieser elektrische Art der Kopplung keinerlei nach außen zugängliche Kontakte vorhanden sind, ist eine Verletzungsgefhr auch bei unsachgemäßer Handhabung sicher ausgeschlossen. Weiter ist eine Anwendung in feuchte oder nasser Umgebung ebenfalls sicher möglich, wobei eine äußerst hohe Betriebessicherheit erricht wird, da keinerlei korrodierende Kontakte oder dgl. vorhanden sind.

Anhand der Zeichnung werden nachfolgen zwei Ausführungsbeispiele näher erläutert. Wie bereits oben erwähnt ist die Erfindung nicht auf diese beispielhaft dargestellten Anwendungsbeispiele beschränkt. Es zeigt.
- Fig. 1: einen Vertikalschnitt durch eine in der Grundform einer Glühbirne ausgebildeten Leuchte mit einem Kupplungselement sowie einer Leuchtenfassung;
- Fig. 2: einen Vertikalschnitt durch eine Ausführungsform einer Leuchte mit mehreren LED als Leuchtmittel sowie einer speziell angepassten Ausgestaltung einer Leuchtenfassung.

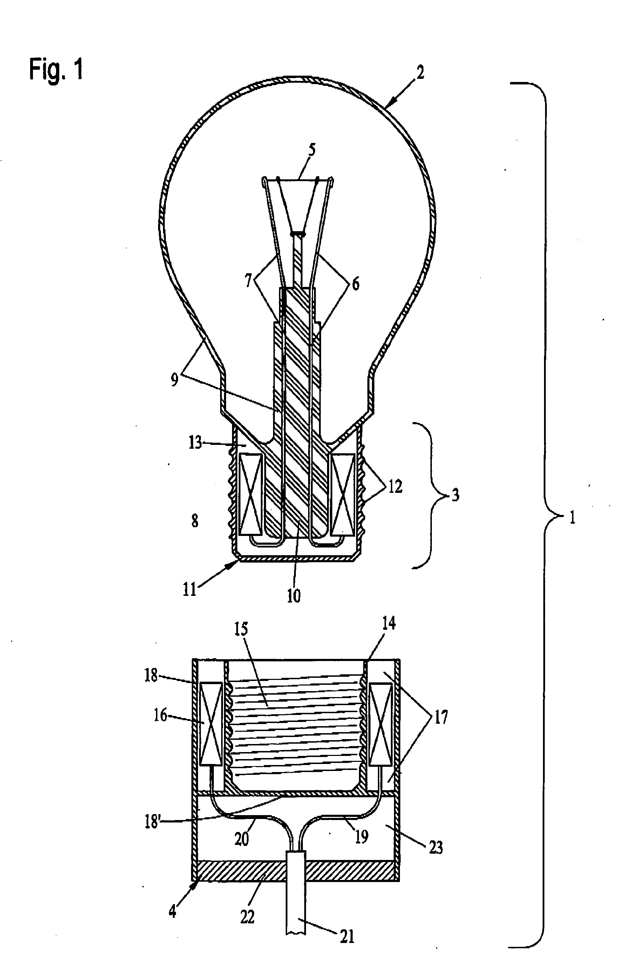

Fig. 1 zeigt beispielhaft eine Leuchte 1, welche im Wesentlichen aus einer Art herkömmlicher Glühbirne 2 mit einem Kupplungselement 3 und einer Leuchtenfassung 4 besteht. Wie aus dem Stand der Technik bekannt ist, weist eine solche Glühbirne 2 als Licht emittierendes Leuchtmittel einen Glühdraht 5 auf, welcher über zwei Zuleitungsdrähte 6 und 7 zur elektrischen Energieversorgung mit einer ringförmigen Sekundärspule 8 in Verbindung steht. Die Zuleitungsdrähte 6 und 7 sind, wie aus dem Stand der Technik bekannt durch einen Glaskörper 9 der Glühbirne 2 geführt. Der Glaskörper 9 bildet in seinem unteren Endbereich einen Aufnahmestutzen 10, auf welchen die Sekundärspule aufgesetzt ist.

Die Sekundärspule 8 ist beim vorliegenden Ausführungsbeispiel von einem Schraubsockel 11 umgeben, welcher mit einem Außengewinde 12 versehen ist. Zur festsitzenden Halterung sowohl der Sekundärspule 8 als auch des Schraubsockels 11 ist beispielsweise eine aus Kunstharz oder dergleichen bestehende Vergussmasse vorgesehen, welche den innerhalb des Schraubsockels 11 gebildeten Hohlraum 13 möglichst vollständig ausfüllt. Eine solche Verbindungsart des Schraubsockels 11 mit dem Aufnahmestutzen 10 ist aus dem Stand der Technik bei herkömmlichen Glühbirnen hinreichend bekannt.

Weiter ist aus Fig. 1 ersichtlich, dass die Leuchtenfassung 4 topfartig ausgebildet ist und eine ringförmige Innenwand 14 aufweist, welche mit einem Innengewinde 15 versehen ist. In dieses Innengewinde 15 ist die Glühbirne 2 mit ihrem Schraubsockel 11 passend einschraubbar. Im axialen Bereich dieses Innengewindes 15 ist eine ringförmige Primärspule 16 vorgesehen, welche in einem Aufnahmeraum 17 angeordnet ist, der von der Innenwand 14 und einer die Innenwand 14 in radialem Abstand umlaufend umgebenden Außenwand 18 der Leuchtenfassung 4 gebildet wird.

Auch die Primärspule 16 kann durch eine Vergussmasse im Aufnahmeraum 17 fixiert sein, wobei die Vergussmasse gleichzeitig eine wasserdichte Abdichtung des gesamten Aufnahmeraumes 17 und somit auch der Primärspule 16 bewirkt.

Die Anordnung der Primärspule 16 im axialen Bereich des Innengewindes 15 ist beim vorliegenden Ausführungsbeispiel so gewählt, dass die Sekundärspule 8 im montierten Zustand der Glühbirne 2 in der Leuchtenfassung 4 etwa in demselben Axialbereich liegen. Damit wird eine möglichst optimale induktive Wirkung mit nur äußerst geringe Leistungsverlusten erzielt. Theoretisch kann auch eine ein axial hintereinander liegende Anordnung der Primär- und Sekundarspule (evtl. mit gleichem Durchmesser) gewählt werden, wobei in einem solchen Fall die in der Sekundärspule erzeugbare Induktionswirkung geringer wäre. Auch könnte die Leuchtenfassung 4 als "Gewindezapfen" ausgebildet sein und dementsprechend eine Primärspule geringen Durchmessers aufweisen. Bei einer solchen Lösung müsste die Glühbirne 2 mit einem entsprechenden Innengewinde versehen werden, um welches herum die Sekundärspule wiederum anzuordnen wäre.

Des Weiteren ist aus Fig. 1 erkennbar, dass die Leuchtenfassung 4 beim vorliegenden Ausführungsbeispiel einen Zwischenboden 18' aufweist, durch welchen im radialen Bereich des Aufnahmeraumes 17 zwei Anschlussleitungen 19 und 20 dicht hindurchgeführt sind. Diese Anschlussleitungen sind Teil einer Stromversorgungsleitung 21, welche beispielsweise mit dem Hausnetz in Verbindung steht. Je nach Auslegung des Glühdrahtes 5 bzw. der Glühbirne 2 kann die Spannungsversorgung im normalen 230 V-Bereich oder auch im Niederspannungsbereich bei 24 V oder 12 V oder auch in jedem anderen gewünschten Spannungsbereich liegen. Die Stromversorgungsleitung 21 ist beim vorliegenden Ausführungsbeispiel durch einen die Leuchtenfassung 4 nach unten abschließenden und diese dicht verschließenden Verschlussdeckel 22 geführt, so dass die Anschlussleitungen 19 und 20 ebenfalls nicht einfach von außen zugänglich sind. Dabei kann auch vorgesehen sein, dass in dem zwischen dem Verschlussdeckel 21 und dem Zwischenboden 18' gebildeten Raum 23 so genannte Anschlussklemmen (in der Zeichnung nicht dargestellt) angeordnet sind, mit welchen die beiden Anschlussleitungen 19 und 22 abnehmbar verbunden sind. Von solchen Anschlussklemmen würden dann entsprechende Verbindungsleitungen zur Primärspule 16 führen.

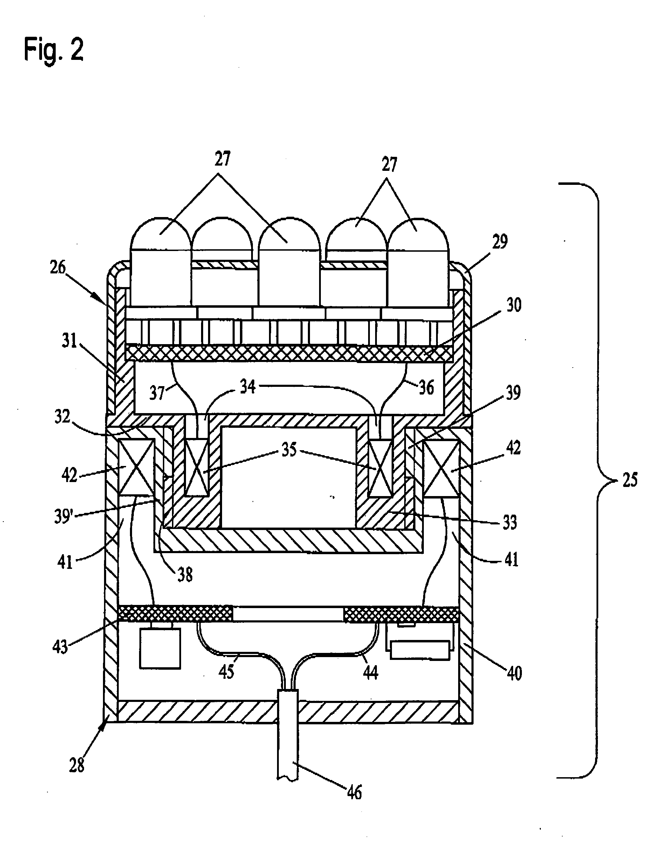

Die beispielhaft in Fig. 1 dargestellte Leuchte 1 ist durch ihre Ausgestaltung gefahrlos auch durch unerfahrene Anwender einsetzbar, da insbesondere keinerlei Anschlusskontakte oder Verbindungskontakte von außen zugänglich sind. Insbesondere ist die Leuchte 1 optimal für einen Einsatz in feuchter Umgebung oder auch unter Wasser geeignet. Dabei kann auch die Verbindung zwischen der Glühlampe 2 und der Leuchtenfassung 4 in anderer Art ausgebildet sein. Hier können beispielsweise auch lösbare Rast- oder Klemmverbindungen vorgesehen sein, so dass die Glühbirne 2 einfach in die Leuchtenfassung 4 einsteckbar und wieder heraus ziehbar ist. Auch kann anstatt einer Glühbirne 2 mit ihrem Glühdraht 5 als Leuchtmittel auch andere Licht emittierende Leuchten vorgesehen sein. Hierzu sei beispielhaft auf die Darstellung der Fig. 2 eingegangen, in welcher eine Leuchte 25 erkennbar ist, die aus einem Leuchtenkopf 26 mit LED 27 als Leuchtmittel und ebenfalls einer Leuchtenfassung 28 besteht.

Bei dieser Ausführungsvariante ist der Leuchtenkopf 26 mit einem diesen nach oben abschließenden Deckel 29 versehen, welchen die LED 27 nach außen zumindest mit ihrem etwa halbkugelförmig ausgebildeten Kopfabschnitt durchragen. Die LED 27 sind beim vorliegenden Ausführungsbeispiel auf einer gemeinsamen Platine 30 angeordnet und bilden somit eine Leuchtmittelgruppe. Die Platine 30 ist in einem topfförmigen Grundgehäuse 31 des Leuchtenkopfes 26 feststehend eingesetzt. Des Weiteren weist der Gehäuseboden 32 des Leuchtenkopfes 26 einen axial nach unten vorstehenden, umlaufenden Kupplungssteg 33 als Kupplungselement auf, welcher in seiner Außenkontur zapfenartig gestaltet ist. Der Kupplungssteg 33 bildet beim vorliegenden Ausführungsbeispiel eine nach oben zum Grundgehäuse 31 hin offene Aufnahmenut 34, in welche eine Sekundärspule 35 feststehend eingesetzt ist. Die Sekundärspule 35 steht über entsprechende Zuleitungsdrähte 36 und 37 mit der Platine 30 in Verbindung, so dass die LED 27 über eine in der Sekundärspule 35 induzierte "Versorgungsspannung" mit der notwendigen elektrischen Energie versorgbar sind.

Des Weiteren ist aus Fig. 2 ersichtlich, dass der Kupplungssteg 33 ein Außengewinde 38 aufweist, über welches der Leuchtenkopf 26 mit der Leuchtenfassung 28 auswechselbar in Verbindung steht. Ähnlich wie bereits zum Ausführungsbeispiel der Fig. 1 beschrieben, weist die Leuchtenfassung 28 ebenfalls ein Innengewinde 39 auf, welches Bestandteil einer axial in die Leuchtfassung 28 hineinragenden Innenwand 39' ist. Diese Innenwand 39' ist in radialem Abstand von einer Zylinderwand 40 der Leuchtenfassung 28 umgeben und bildet zusammen mit dieser ebenfalls eine Aufnahmenut 41. In diese Aufnahmenut 41 ist eine Primärspule 42 eingesetzt, welche im montierten Zustand der Leuchtenfassung 28 am Leuchtenkopf 26 etwa im axialen Bereich der Sekundärspule 35 angeordnet ist, so dass auch hier eine möglichst optimale Induktionswirkung in der Sekundärspule 35 ohne größere Verlustleistung erreichbar ist.

Weiter ist aus Fig. 2 ersichtlich, dass in der Leuchtefassung 28 eine Steuerplatine 43 vorgesehen ist, welche über zwei Anschlussleitung 44 und 45 einer Stromversorgungsleitung 46 beispielsweise mit einer Netzspannung versorgt wird. Dies Steuerplatine kann beispielsweise als elektronisches Netzteil ausgebildet sein, um die Primärspule auf Niederspannungsbasis mit einer Wechselspannung von 12 V oder 24 V zu versorgen. Je nach dem Energiebedarf bzw. der Leistungsaufnahme der LED kann eine solche Steuerplatine auch entfallen und die notwendige Betriebsspannung für die LED durch Transformation erzeugt werden, indem die Primärspule 42 und die Sekundärspule 35 mit unterschiedlicher Anzahl von Wicklungen ausgestattet werden.

Auch beim Ausführungsbeispiel der Fig. 2 kann sowohl der Leuchtenkopf 26 als auch die Leuchtenfassung 28 vollständig mit einem Kunstharz oder einem ähnlichen Werkstoff völlig dicht ausgegossen sein, so dass sich auch dies Leuchte 25 insbesondere optimal für den Einsatz in feuchter Umgebung oder auch unter Wasser eignet. Insbesondere sind auch hier keinerlei besonderen Maßnahmen zu ergreifen, um beispielsweise eine korrosive oder andersartige Beschädigung von elektrischen Kontakten zur vermeiden, da auch hier keine solche Kontakte vorgesehen sind. Des weiteren kann durch die Einschraubtiefe oder Einschubtiefe des Kupplungselementes 11 bzw. 33 in die Leuchtenfassung 4 bzw. 28 auch die Leuchtstärke der Glühbirne 2 bzw. der LED 27 auf ein gewünschtes Niveau eingestellt werden. Die Einschraubtiefe kann dabei zum Beispiels über zwischen der Glühbirne 2 und der Leuchtenfassung 4 bzw. zwischen dem Leuchtenkopf 26 und der Leuchtenfassung 28 eingesetzte Distanzscheiben eingestellt werden.

Weiter kann die Leuchtenfassung zumindest im Bereich der Primärspule mit Kühlrippen oder dgl. versehen sein, um eine evtl. durch die Induktion hervorgerufene evtl. starke Erwärmung abzuführen, so dass insbesondere auch bei einem Betrieb auf 230 V-Basis keine Überhitzung auftreten kann.

## Patentansprüche

1. Leuchte (1, 25) mit einem Licht erzeugenden Leuchtmittel (5, 27) und einem Kupplungselement (3, 33), über welches dem Leuchtmittel (5, 27) elektrische Energie zuführbar ist und mit einer Leuchtenfassung (4, 28) mit welcher das Kupplungselement (3, 33) koppelbar ist,
**dadurch gekennzeichnet,**
**dass** zur elektrischen Kopplung zwischen der Leuchtenfassung (4, 28) und dem Kupplungselement (3, 33) und zur Energieversorgung des Leuchtmittels (5, 27) eine der Leuchtenfassung (4, 28) zugeordnete Primärspule (16, 42) und eine dem Kupplungselement (3, 33) zugeordnete Sekundärspule (8, 35) vorgesehen sind.

2. Leuchte nach Anspruch 1, **dadurch gekennzeichnet, dass** die Primärspule (16, 42) und die Sekundärspule (8, 35) bei mit der Leuchtenfassung (4, 28) gekoppeltem Kupplungselement (3, 33) einander benachbart angeordnet sind.

3. Leuchte nach Anspruch 1 oder 2, **dadurch gekennzeichnet, dass** das Kupplungselement (3, 33) zapfenförmig ausgebildet ist und, dass die Sekundärspule (8, 35) als Ringspule im Kupplungselement (3, 33) angeordnet ist und,
dass die Leuchtenfassung (4, 28) topfartig ausgebildet ist und, dass die Primärspule (16, 42) als Ringspule ausgebildet in der Leuchtenfassung (4, 28) angeordnet ist.

4. Leuchte nach Anspruch 3, **dadurch gekennzeichnet, dass** das Kupplungselement (3, 33) in die Leuchtenfassung (4, 28) einsetzbar ist und, dass die Primärspule (16, 42) die Sekundärspule (8, 35) bei eingestecktem Kupplungselement (3, 33) in geringem radialen Abstand umschließt.

5. Leuchte nach Anspruch 4, **dadurch gekennzeichnet, dass** das Kupplungselement (3, 33) mit der Leuchtenfassung (4, 28) über eine Gewindeverbindung (12, 15 bzw. 38, 39), eine Reibschlussverbindung oder eine lösbare Rastverbindung lösbar gekoppelt ist.

6. Leuchte nach einem der Ansprüche 1 bis 5, **dadurch gekennzeichnet, dass** die Leuchte (1) als Glühbirne (2) mit einem Glühdraht (5) als Leuchtmittel ausgebildet ist und, dass die Sekundärspule (8) in einem als Kupplungselement (3) dienenden Schraubsockel (11) der Glühbirne (2) angeordnet ist.

7. Leuchte nach Anspruch 6, **dadurch gekennzeichnet, dass** die Sekundärspule (8) im Schraubsockel (11) dicht eingegossen ist.

8. Leuchte nach Anspruch 5, 6 oder 7, **dadurch gekennzeichnet, dass** die Leuchtenfassung (4, 28) eine umlaufende Innenwand (14, 39')mit einem Innengewinde (15, 39) aufweist und,
dass in radialem Abstand zur Innenwand (14, 39') eine Außenwand (18, 40) vorgesehen ist und,
dass die Primärspule (16, 42) zwischen der Innenwand (14, 39') und der Außenwand (18, 40) im axialen Bereich des Innengewindes (15, 39) angeordnet und in die Leuchtenfassung (4, 28) dicht eingegossen ist.

9. Leuchte nach Anspruch 1, **dadurch gekennzeichnet, dass** als Leuchtmittel wenigstens eine LED (27) vorgesehen ist, welche in einem mit dem Kupplungselement (33) in Verbindung stehenden Grundgehäuse (31) angeordnet ist.

10. Leuchte nach Anspruch 9, **dadurch gekennzeichnet, dass** die LED (27) auf einer Platine (30) derart angeordnet ist bzw. sind, dass die LED (27) bei einer vorbestimmten Position der Platine (30) im Grundgehäuse (31) aus dem Grundgehäuse (31) zumindest teilweise radial und/oder axial herausragt bzw. herausragen.

11. Leuchte nach Anspruch 10, **dadurch gekennzeichnet, dass** die im Grundgehäuse (31) angeordnete Platine (30) und die sich bis in das Grundgehäuse (31) erstreckenden Teile der LED (27) dicht mit einem Kunstharz oder einem ähnlichen Werkstoff vergossen sind.
